# EUROPEAN PATENT SPECIFICATION

(11) **EP 4 297 115 B1**
(45) Date of publication and mention of the grant of the patent: **11.02.2026**
(21) Application number: 22849731.9
(22) Date of filing: 28.06.2022
(51) Int. Cl.: H01M 4/04, F26B 3/04, F26B 3/18, F26B 3/30

(54) **ELECTRODE DRYING DEVICE, ELECTRODE MANUFACTURING SYSTEM INCLUDING THE SAME, METHOD FOR MANUFACTURING THE ELECTRODE, AND ELECTRODE MANUFACTURED BY THE METHOD**
ELEKTRODENTROCKNUNGSVORRICHTUNG, ELEKTRODENHERSTELLUNGSSYSTEM MIT DIESER VORRICHTUNG, VERFAHREN ZUR HERSTELLUNG DER ELEKTRODE UND NACH DIESEM VERFAHREN HERGESTELLTE ELEKTRODE
DISPOSITIF DE SÉCHAGE D'ÉLECTRODES, SYSTÈME DE FABRICATION D'ÉLECTRODES INCLUANT CELUI-CI, PROCÉDÉ DE FABRICATION D'ÉLECTRODES ET ÉLECTRODES FABRIQUÉES SELON CE PROCÉDÉ

(30) Priority: 26.07.2021 KR 20210098017
(43) Date of publication of application: 27.12.2023
(73) Proprietor: LG Energy Solution, Ltd., Seoul 07335 (KR)
(72) Inventor: JANG, Jin-Su, Daejeon 34122 (KR); KIM, Sue-Jin, Daejeon 34122 (KR); RYU, Duk-Hyun, Daejeon 34122 (KR); PARK, Geun-Ho, Daejeon 34122 (KR); PARK, Sang-Jin, Daejeon 34122 (KR); LEE, Kwan-Hee, Daejeon 34122 (KR); LEE, Yun-Ju, Daejeon 34122 (KR)
(74) Representative: Goddar, Heinz J.
(86) International application number: PCT/KR2022/009269
(87) International publication number: WO 2023/008752

(56) References cited:
- WO-A1-2014/049692
- CN-B- 102 476 095
- JP-A- 2004 249 261
- JP-A- 2006 136 762
- JP-A- 2011 040 371
- JP-A- 2012 097 917
- JP-A- 2013 137 168
- JP-A- 2014 017 158
- JP-A- 2015 172 450
- JP-A- 2017 091 726
- JP-A- 2019 029 256
- KR-A- 20120 057 437
- KR-A- 20150 058 351
- KR-A- 20170 092 062
- KR-A- 20200 059 001

## Description

### TECHNICAL FIELD

The present application claims priority to Korean Patent Application No. 10-2021-0098017 filed on July 26, 2021 in the Republic of Korea.

The present disclosure relates to an electrode drying device, an electrode manufacturing system including the same, a method for manufacturing the electrode, and an electrode manufactured by the method.

### BACKGROUND ART

Secondary batteries that have ease of application according to product groups and have electrical characteristics such as high energy density are universally applied not only to portable devices, but also to electric vehicles (EVs) or hybrid electric vehicles (HEVs) driven by an electric drive source. These secondary batteries are attracting attention as a new energy source for improving eco-friendliness and energy efficiency because they not only have the primary advantage of dramatically reducing the use of fossil fuels, but also do not generate any by-products from the use of energy.

Types of secondary batteries currently widely used include lithium-ion batteries, lithium polymer batteries, nickel cadmium batteries, nickel hydrogen batteries, nickel zinc batteries, and the like. Such a unit secondary battery cell, that is, a unit battery cell, has an operating voltage of about 2.5 V to 4.5 V. Therefore, when a higher output voltage is required, a battery pack may be configured by connecting a plurality of battery cells in series. In addition, a plurality of battery cells may be connected in parallel to form a battery pack according to the charge/discharge capacity required for the battery pack. Accordingly, the number of battery cells included in the battery pack may be variously set according to a required output voltage and/or charge/discharge capacity.

On the other hand, the electrode applied to the secondary battery is manufactured by coating an electrode active material on an electrode current collector. For example, the negative electrode is prepared by coating a slurry containing a negative electrode active material on a negative electrode current collector and drying the same.

On the other hand, the sliding phenomenon means that, due to the spread of the slurry containing the electrode active material, less electrode active material is coated in a slurry coating boundary region than in regions other than the slurry coating boundary region, so that the slurry in the coating boundary region has an approximately inclined shape.

Here, if the electrode is completely dried, the volume of the slurry decreases as the solvent contained in the slurry evaporates, and the sliding phenomenon may intensify near the boundary between the region where the electrode active material is coated and the region where the electrode active material is not coated.

In the sliding region formed by the intensified sliding phenomenon, an NP ratio of the positive/negative electrode is reversed to 100% or less, and thus lithium metal may be precipitated. The NP ratio means a ratio of capacity per unit area of the negative electrode active material and the positive electrode active material. In general, a lithium-ion secondary battery is manufactured so that a capacity of the negative electrode active material is larger than a capacity of the positive electrode active material. Therefore, a typical NP ratio is greater than 100%. If the NP ratio of the positive/negative electrode is reduced to 100% or below due to the sliding phenomenon, the precipitated lithium metal may grow into a needle shape and cause a short circuit of the battery. In addition, lithium ions may decrease due to the precipitation of metallic lithium, which may deteriorate the battery efficiency and decrease the capacity.

Therefore, it is required to find a way to maintain the NP ratio above a certain level by suppressing the occurrence of a sliding region when manufacturing an electrode.

Documents CN102476095 B, KR20200059001 A, JP2006136762 A and JP2019029256 A discloses drying devices according to the prior art.

### DISCLOSURE

### Technical Problem

The present disclosure is designed to solve the problems of the related art, and therefore the present disclosure is directed to suppressing the occurrence of a sliding region when manufacturing an electrode of a secondary battery.

Furthermore, the present disclosure is directed to preventing lithium ions from precipitating by maintaining a NP ratio above a certain level by suppressing the occurrence of the sliding region of the electrode.

In addition, the present disclosure is directed to increasing safety and efficiency of a battery by preventing precipitation of lithium ions.

### Technical Solution

The invention is a drying device according to claim 1 and a method according to claim 11.

In one aspect of the present disclosure, there is provided a drying device, comprising: a first drying unit configured to dry an electrode active material located in a coating boundary region including a boundary of a portion in which the electrode active material is coated and a portion in which the electrode active material is not coated on an electrode current collector; and a second drying unit configured to dry the electrode active material coated on the electrode current collector as a whole.

Here, the second drying unit is configured to dry an electrode active material located in a region other than the coating boundary region.

The drying device may be configured such that drying by the first drying unit is performed prior to drying by the second drying unit.

Meanwhile, the first drying unit may be disposed upstream in a transfer direction of the electrode current collector, compared to the second drying unit.

The drying device may be configured to transfer the electrode current collector along a direction in which the boundary extends.

The first drying unit and the second drying unit may be located to be spaced apart from each other along the direction in which the boundary extends.

Meanwhile, the drying device further comprises a boundary sensor configured to sense the coating boundary region.

Here, the drying device further comprises a control unit configured to control movement of the first drying unit to move above the coating boundary region with reference to the sensing result of the boundary sensor.

Meanwhile, the drying device may further comprise a transfer unit configured to transfer the electrode current collector coated with the electrode active material in one direction.

Meanwhile, the electrode current collector may be a negative electrode current collector, and the electrode active material may be a negative electrode active material.

Meanwhile, at least one of the first drying unit and the second drying unit may be a hot air blower for supplying air at a temperature higher than room temperature.

Alternatively, at least one of the first drying unit and the second drying unit may be an IR heater (InfraRed heater).

Meanwhile, an electrode manufacturing system according to the present disclosure in order to accomplish the above object includes: a coating device configured to coat an electrode active material on at least one surface of an electrode current collector; and a drying device configured to dry the electrode active material coated by the coating device.

The electrode manufacturing system may further comprise a rolling device configured to roll-press the dried electrode active material.

Meanwhile, a method for manufacturing an electrode using the drying device according to an aspect of the present disclosure according to an aspect of the present disclosure in order to accomplish the above object includes: (S1) preparing an electrode current collector; (S2) coating an electrode active material on at least a portion of the electrode current collector; (S3) drying an electrode active material located in a coating boundary region including a boundary of a portion in which the electrode active material is coated and a portion in which the electrode active material is not coated on the electrode current collector; and (S4) drying the electrode active material coated on the electrode current collector as a whole.

Here, the step (S4) may be a step of drying an electrode active material located in a region other than the coating boundary region.

Alternatively, the step (S4) may be a step of drying both the electrode active material located in the coating boundary region and an electrode active material located in a region other than the coating boundary region.

Meanwhile, when drying an electrode active material region located at any point along a transfer direction of the electrode current collector, the drying of the step (S3) may be performed prior to the drying of the step (S4).

The method for manufacturing an electrode may further comprise the step of transferring the electrode current collector along a direction in which the boundary extends.

The drying according to the step (S3) and the drying according to the step (S4) may be simultaneously performed at positions spaced apart from each other along the direction in which the boundary extends.

The method for manufacturing an electrode may further comprise the step of (S5) roll-pressing the dried electrode active material.

Meanwhile, an electrode according to an aspect of the present disclosure in order to accomplish the above object includes: an electrode current collector and an electrode active material coated on the electrode current collector, wherein a portion of the electrode active material located in the coating boundary region including a boundary between a portion in which the electrode active material is coated and a portion in which the electrode active material is not coated on the electrode current collector are dried primarily, and wherein the electrode active material coated on the electrode current collector is entirely dried secondarily.

The area dried by the secondary drying may be a portion of the electrode active material located in a region other than the coating boundary region.

The area dried by the secondary drying may be an entire area including a portion of the electrode active material located in the coating boundary region and a portion of the electrode active material located outside the coating boundary region.

The electrode may be a negative electrode.

### Advantageous Effects

According to the present disclosure, the occurrence of a sliding region is suppressed when the electrode of the secondary battery is manufactured.

Furthermore, according to the present disclosure, the NP ratio is maintained above a certain level, and lithium-ion precipitation is prevented.

In addition, according to the present disclosure, the safety and efficiency of the battery are increased.

In addition, the present disclosure may have various other effects, which will be described in each embodiment, or a corresponding description will be omitted for effects that can be easily inferred by a person skilled in the art.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a drying device according to an embodiment of the present disclosure.
FIG. 2 is a diagram showing a state in which an electrode active material is coated on an electrode current collector.
FIG. 3 is a diagram showing an electrode dried by the drying device of FIG. 1.
FIG. 4 is a diagram showing an electrode dried by a conventional drying method.
FIG. 5 is a diagram showing a graph for comparing thicknesses of the dried electrode active materials of FIG. 3 and FIG. 4.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments disclosed in this specification and the configuration illustrated in the drawings are only one of the most preferred embodiments of the present disclosure and do not represent all the technical idea of the present disclosure.

In addition, in order to help understanding of the present disclosure, the accompanying drawings are not drawn to scale, but dimensions of some components may be exaggerated.

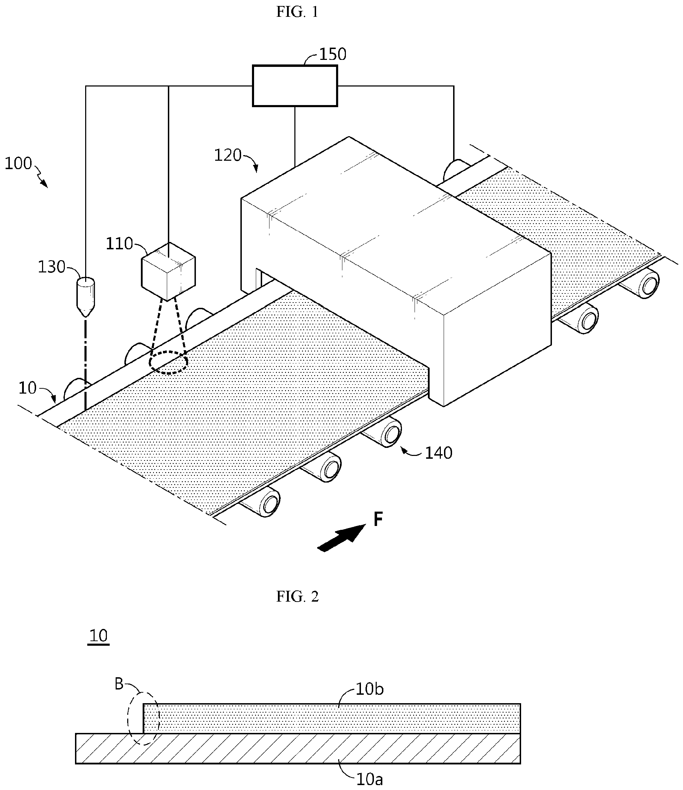

FIG. 1 is a diagram showing a drying device according to an embodiment of the present disclosure, and FIG. 2 is a diagram showing a state in which an electrode active material is coated on an electrode current collector.

Referring to FIGS. 1 and 2, a drying device 100 according to an embodiment of the present disclosure includes a first drying unit 110 and a second drying unit 120.

In order to manufacture an electrode 10 of a secondary battery to be described later, it is necessary to coat an electrode active material 10b on an electrode current collector 10a and then dry the same. The drying device 100 is a device for drying the electrode 10 during the manufacturing process of the secondary battery. The electrode current collector 10a and the electrode active material 10b will be described later in detail with reference to FIGS. 2 to 4.

At least one of the first drying unit 110 and the second drying unit 120 may be a hot air blower that supplies air at a temperature higher than room temperature. That is, it is possible to dry the electrode active material 10b using hot air at a high temperature.

Alternatively, at least one of the first drying unit 110 and the second drying unit 120 may be an IR heater (InfraRed heater). The IR heater is a heater that heats an object to be heated by causing molecular motion of the object to be heated using infrared rays. Therefore, when the IR heater is employed in the first drying unit 110 or the second drying unit 120 of the present disclosure, the infrared rays may generate molecular motion of a slurry containing the electrode active material 10b to heat the electrode active material 10b. Therefore, the electrode active material 10b may be dried by heat.

However, the types of the first drying unit 110 and the second drying unit 120 are not limited thereto, and any device capable of smoothly drying the electrode active material 10b may be employed. For example, the first drying unit 110 or the second drying unit 120 may be a vacuum dryer that dries an object using vacuum.

The first drying unit 110 may be configured to dry the electrode active material 10b located in a coating boundary region B including a boundary between a portion in which the electrode active material 10b is coated and a portion in which the electrode active material 10b is not coated on the electrode current collector 10a. The second drying unit 120 may be configured to dry the electrode active material 10b coated on the electrode current collector 10a as a whole.

The drying device of the present disclosure may be configured such that drying by the first drying unit 110 is performed prior to drying by the second drying unit 120. For example, due to the operation sequence and/or arrangement position of the first drying unit 110 and the second drying unit 120, the electrode active material 10b located in the coating boundary region B may be dried prior to the electrode active material 10b located in a region other than the coating boundary region B. For example, the first drying unit 110 may be disposed upstream in a transfer direction F of the electrode current collector 10a, compared to the second drying unit 120. Therefore, in the electrode current collector 10a transferred in one direction, the electrode active material 10b located in the coating boundary region B may be dried first by the first drying unit 110. Accordingly, the lateral contraction of the electrode active material 10b located in the coating boundary region B coated with the electrode active material 10b may be controlled. Thereafter, the electrode active material 10b coated on the electrode current collector 10a may be dried as a whole by the second drying unit 120 disposed downstream in the transfer direction F.

Meanwhile, the second drying unit 120 may be configured to dry the electrode active material 10b located in a region other than the coating boundary region B. For example, since the electrode active material 10b located in the coating boundary region B has already been dried by the first drying unit 110, if it is further dried by the second drying unit 120, the volume of the electrode active material 10b may be excessively reduced and/or the electrode active material 10b may be broken due to excessive drying during a followed process such as a roll-pressing process. Accordingly, the second drying unit 120 may be configured to dry only the electrode active material 10b located in a region other than the coating boundary region B, excluding the coating boundary region B. In this case, it is possible to prevent the volume of the electrode active material 10b located in the coating boundary region B from being excessively reduced and/or prevent the electrode active material 10b from being broken during a roll-pressing process.

Meanwhile, the second drying unit 120 may dry both the electrode active material 10b located in the coating boundary region B and the electrode active material 10b located in a region other than the coating boundary region B. For example, the size of the electrode 10 may be different depending on the type of the secondary battery. Therefore, when drying several types of electrodes 10 having different sizes, an additional process for classifying the coating boundary region B and a region other than the coating boundary region B may be required. Such an additional process may increase cost and complicate the manufacturing process. Therefore, to be applicable even when drying several types of electrodes 10 having different sizes, the second drying unit 120 may dry both the electrode active material 10b located in the coating boundary region B and the electrode active material 10b located in a region other than the coating boundary region B at the same time. In this case, the drying conditions (drying temperature, drying time, or the like) of the first drying unit 110 and the second drying unit 120 may be suitably adjusted, and thus it is possible to prevent any problem from occurring due to excessive drying.

Referring to FIG. 1, the drying device 100 according to an embodiment of the present disclosure includes a boundary sensor 130 and/or a transfer unit 140 and/or a control unit 150.

The boundary sensor 130 is a sensor that senses the coating boundary region B. As the boundary sensor 130, for example, an image recognition camera, an ultrasonic sensor, or the like may be applied. However, they are just examples, and any device capable of sensing a boundary may be employed as the boundary sensor 130 of the present disclosure.

The electrode current collector 10a may be transferred by, for example, the transfer unit 140. The transfer unit 140 may be configured to transfer the electrode 10 in one direction. More specifically, the transfer unit 140 may be configured to transfer the electrode current collector 10a coated with the electrode active material 10b in one direction. The electrode 10 may be arranged such that, for example, a non-coating line (not shown) having a predetermined width on which the electrode active material 10b is not coated extends along a direction parallel to the transfer direction F of the electrode 10. That is, the drying device may be configured to transport the electrode current collector 10a along a direction in which the boundary between the coated area and the non-coated area of the electrode active material 10b extends. In this case, the first drying unit 110 and the second drying unit 120 may be located, for example, to be spaced apart from each other along the direction in which the boundary extends. When the first drying unit 110 and the second drying unit 120 are arranged in this way, drying may be performed simultaneously by the first drying unit 110 and the second drying unit 120 at positions spaced apart from each other along the direction in which the boundary extends.

For example, referring to FIG. 1, the transfer unit 140 may be an aggregate of a plurality of rollers disposed under the electrode 10. As the roller rotates, the electrode 10 placed on the rollers may be transferred in the transfer direction F by frictional force. Alternatively, although not shown in the drawings, the transfer unit 140 may be, for example, a conveyor belt.

Meanwhile, even though the transfer unit 140 may be provided as a part of the drying device 100, the transfer unit 140 may also be provided as a separate component from the drying device 100. For example, although not shown in the drawings, the transfer unit 140 may include, for example, an unwinding roll for unwinding the wound electrode 10 or the wound electrode current collector 10a, and a winding roll for rewinding the dried electrode 10. More specifically, the electrode current collector 10a or the electrode 10 may be wound on the unwinding roll. The electrode current collector 10a or the electrode 10, which has been wound, may be unwound by rotation of the unwinding roll and transferred in a flat form. If the element wound on the unwinding roll is the electrode current collector 10a that is not coated with the electrode active material 10b, the electrode current collector 10a enters a coating device to be described later along the transfer direction F, and then enters a region in which the drying device 100 is disposed. Alternatively, if the element wound on the unwinding roll is the electrode 10 coated with the electrode active material 10b, the electrode 10 may enter the region in which the drying device 100 is installed along the transfer direction F. After that, the dried electrode current collector 10a in a flat shape may be wound again on the winding roll. That is, by the rotation of the unwinding roll and the winding roll, the electrode current collector 10a or the electrode 10 may be transferred in one direction.

However, the specific embodiment of the transfer unit 140 is not limited thereto, and any device capable of transferring the electrode current collector 10a or the electrode 10 in one direction may be employed as the transfer unit 140 of the present disclosure.

The control unit 150 controls the movement of the first drying unit 110 to move above the coating boundary region B with reference to the sensing result of the boundary sensor 130.

For example, referring to FIG. 1, the boundary sensor 130 senses the coating boundary region B and transmit a signal including the sensing result to the control unit 150. The control unit 150 may determine whether the location value of the first drying unit 110 matches a predetermined value based on the received signal. If the location value of the first drying unit 110 does not match the predetermined value, the control unit 150 may transmit a movement command signal to the first drying unit 110. Upon receiving the movement command signal, the first drying unit 110 may move above the coating boundary region B based on the signal. Therefore, the first drying unit 110 may reliably dry the electrode active material 10b located in the coating boundary region B.

According to the control unit 150 of the present disclosure according to the above embodiment, even when several types of electrodes 10 having different sizes are dried, the coating boundary region B may be dried first by accurately identifying the coating boundary region B.

The control unit 150 may control the drying strength of the first drying unit 110 and the second drying unit 120. In addition, the control unit 150 may adjust the transfer speed of the transfer unit 140.

Meanwhile, the electrode 10 according to an embodiment of the present disclosure includes an electrode current collector 10a and an electrode active material 10b coated on the electrode current collector 10a. In the electrode 10, the portion of the electrode active material 10a located in the coating boundary region including a boundary between a portion coated with the electrode active material 10b and a portion not coated therewith on the electrode current collector 10a may be dried primarily. After that, the electrode active material 10b coated on the electrode current collector 10a may be entirely dried secondarily.

The area to be dried by the secondary drying may be a portion of the electrode active material 10b located in a region other than the coating boundary region. Alternatively, the area dried by the secondary drying may be the entire area including the portion of the electrode active material 10b located in the coating boundary region and the portion of the electrode active material 10b located outside the coating boundary region.

Meanwhile, the electrode 10 of the present disclosure, which is manufactured by performing post-drying as a whole after pre-drying for a partial area, may be a negative electrode.

Although not shown in the drawings, an electrode manufacturing system 1 according to an embodiment of the present disclosure may include the drying device 100 and a coating device (not shown). That is, the electrode manufacturing system 1 may include a coating device for coating the electrode active material 10b on at least one surface of the electrode current collector 10a; and a drying device 100 for drying the electrode active material 10b coated by the coating device. Meanwhile, the electrode manufacturing system 1 may further include a rolling device (not shown). The rolling device may be configured to roll-press the electrode active material 10b to which both primary drying and secondary drying are completely performed.

A method of manufacturing an electrode according to an embodiment of the present disclosure may include the steps of: (S1) preparing an electrode current collector 10a; (S2) coating an electrode active material 10b on at least a portion of the electrode current collector 10a; (S3) drying the electrode active material 10b in a coating boundary region B including a boundary between a portion in which the electrode active material 10b is coated and a portion in which the electrode active material 10b is not coated on the electrode current collector 10a; and (S4) drying the electrode active material 10b coated on the electrode current collector 10a as a whole. The electrode manufacturing method may further include the step of (S5) roll-pressing the dried electrode active material 10b.

The step (S4) may be a step of drying the electrode active material located in a region other than the coating boundary region B. Alternatively, the (S4) step may be a step of drying both the electrode active material 10b located in the coating boundary region and the electrode active material 10b located in a region other than the coating boundary region B.

Meanwhile, in drying an electrode active material region located at any point along the transfer direction F of the electrode current collector 10a, the drying of the step (S3) may be performed prior to the drying of the step (S4). The electrode manufacturing method may further include the step of transferring the electrode current collector 10a along a direction in which the boundary extends. In this case, the drying according to the step (S3) and the drying according to the step (S4) may be simultaneously performed at positions spaced apart from each other along the direction in which the boundary extends.

According to this manufacturing method, by first drying the electrode active material 10b located in the coating boundary region B including the boundary between the portion in which the electrode active material 10b is coated and the portion in which the electrode active material 10b is not coated on the electrode current collector 10a, lateral contraction of the electrode active material 10b may be controlled. Accordingly, the occurrence of a sliding region S may be significantly reduced. The effect of suppressing the generation of the sliding region S will be described in detail with reference to FIGS. 2 to 4.

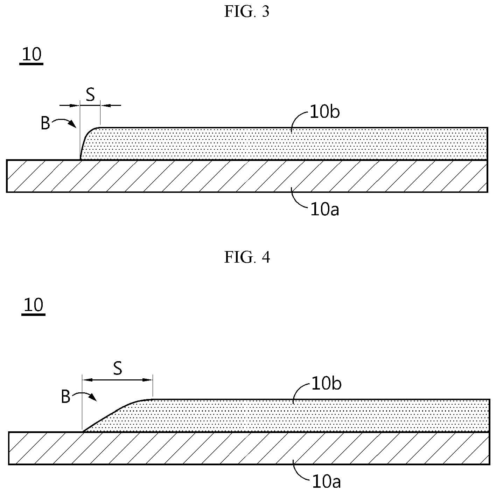

FIG. 2 is a diagram showing a state in which an electrode active material is coated on an electrode current collector. Meanwhile, FIG. 3 is a diagram showing an electrode dried by the drying device of FIG. 1, and FIG. 4 is a diagram showing an electrode dried by a conventional drying method.

Referring to FIGS. 2 to 4, the electrode 10 includes an electrode current collector 10a and an electrode active material 10b.

The electrode 10 may be, for example, a positive electrode or a negative electrode. If the electrode 10 is a positive electrode, the electrode current collector 10a may be a positive electrode current collector and the electrode active material 10b may be a positive electrode active material. At this time, the positive electrode current collector may be made of a metal material including aluminum. In addition, the positive electrode active material may be LCO, NCM, NCMA, NCMX, NCA, LMO, LFP, or the like depending on the constituents of the metal salt. Meanwhile, if the electrode 10 is a negative electrode, the electrode current collector 10a may be a negative electrode current collector and the electrode active material 10b may be a negative electrode active material. In this case, the negative electrode current collector may be made of a metal material including copper. In addition, the negative electrode active material may include graphite or silicon.

Meanwhile, in the present disclosure, the electrode active material 10b does not necessarily mean only a compound acting as a positive electrode active material or a compound acting as a negative electrode active material as described above. That is, in the present disclosure, the electrode active material 10b may further include additives such as a binder and/or a thickener in addition to the compound acting as a positive electrode active material or a compound acting as a negative electrode active material. In addition, in the present disclosure, the electrode active material 10b may refer to an electrode active material in a slurry state including a solvent for dispersing the above-described materials. That is, in the present disclosure, the slurry means the electrode active material 10b before drying.

FIG. 2 is a diagram showing a state in which the electrode active material 10b is coated on the electrode current collector 10a. Before drying, the electrode active material 10b has the form of a slurry containing a solvent. Referring to FIG. 2, the slurry containing the electrode active material 10b is coated on the electrode current collector 10a. In FIG. 2, one end of the slurry located in the coating boundary region B of the coated slurry is approximately perpendicular to the electrode current collector 10a. However, unlike FIG. 2, some degree of sliding may occur at one end of the slurry located in the coating boundary region B due to the fluidity of the slurry. That is, less slurry may be coated in the coating boundary region B than in a region other than coating boundary region B. Accordingly, the sliding region may be formed even before the electrode 10 is dried.

However, if the electrode 10 coated with the slurry is dried as a whole, the volume of the slurry decreases as the solvent contained in the slurry partially evaporates. At this time, the sliding phenomenon may intensify near the boundary of the region in which the slurry is coated and the region in which the slurry is not coated. That is, the sliding phenomenon may intensify when the electrode 10 is dried because the amount of lateral contraction in the region far from the coupling interface of the electrode active material 10b and the electrode current collector 10a is greater than the amount of lateral contraction in the region close to the coupling interface. In the sliding region S formed by the intensified sliding phenomenon, an NP ratio of the positive/negative electrode is reversed to 100% or less, so that lithium metal may be precipitated.

NP ratio means a ratio of capacity per unit area of the negative electrode active material and the positive electrode active material. In general, when manufacturing a lithium-ion secondary battery, the capacity of the negative electrode active material is set larger than the capacity of the positive electrode active material. Therefore, in general cases, the NP Ratio is greater than 100%. If the NP ratio of the positive/negative electrode is reduced to 100% or less due to the sliding phenomenon, the precipitated lithium metal may grow into a needle shape to cause a short circuit of the battery. In addition, the amount of lithium ions may decrease due to precipitation of metallic lithium, which may deteriorate the battery efficiency and decrease the capacity. Therefore, it is necessary to maintain the NP Ratio at a certain level or more by suppressing the occurrence of the sliding region S when manufacturing the electrode 10.

According to the present disclosure, by suppressing the occurrence of the sliding region S, it is possible to maintain the NP Ratio at a certain level. In particular, it is necessary to suppress the occurrence of the sliding region S of the negative electrode 10 in order to prevent the decrease in the NP ratio and to improve the energy density by minimizing the space occupied by the negative electrode active material.

Referring to FIG. 3 showing the electrode 10 dried by the drying device 100 according to an embodiment of the present disclosure, it may be seen that the volume of the slurry in the coating boundary region B is hardly reduced. That is, the lateral contraction of the slurry in the coating boundary region B is controlled. Therefore, in the electrode 10 dried by the drying device 100 of the present disclosure, the sliding region S appears only in a very narrow region.

On the other hand, referring to FIG. 4 showing the electrode 10 dried by a conventional drying method, it may be seen that the volume of the slurry in the coating boundary region B is greatly reduced. That is, in the electrode 10 dried by the conventional drying method, the sliding region S appears in a relatively wide range. When the sliding region S occurs in a wide range as shown in FIG. 4, the NP ratio of the positive/negative electrode is reduced to 100% or less, and lithium metal may be precipitated. Precipitation of metallic lithium may cause a short circuit inside the battery. In addition, as the amount of lithium ions may decrease due to precipitation of metallic lithium, the battery efficiency and the capacity may be reduced.

On the other hand, in the electrode 10 dried by the drying device 100 according to an embodiment of the present disclosure, since the sliding region S appears only in a very narrow region, the NP Ratio may be set to be greater than 100%. Accordingly, it is possible to increase the internal stability of the battery. In addition, since the sliding region S hardly occurs in the electrode 10 dried by the drying device 100 according to an embodiment of the present disclosure, the dead space inside the battery may be minimized, and accordingly, the energy density of the secondary battery may be maximized.

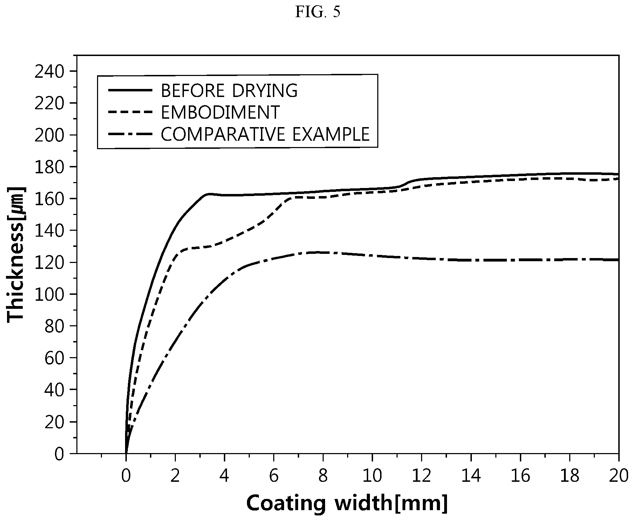

FIG. 5 is a diagram showing a graph for comparing thicknesses of the dried electrode active materials of FIG. 3 and FIG. 4. FIG. 3 is an embodiment of the present disclosure, and FIG. 4 is a comparative example of the present disclosure.

Referring to FIG. 5, in the electrode 10 dried by the drying device 100 according to an embodiment of the present disclosure, the slurry thickness is almost similar to the slurry thickness before drying, and the thickness is reduced only in a very small part. In particular, in the embodiment of the present disclosure, it could be confirmed that almost no lateral contraction occurs in the coating boundary region B.

On the other hand, in the electrode 10 dried according to the conventional drying method, it is confirmed that the slurry thickness is significantly reduced compared to the slurry thickness before drying. Specifically, in the comparative example, the slurry is contracted in the longitudinal direction, and the slurry coating thickness is drastically reduced. In addition, in the comparative example, the slurry is excessively contracted in the lateral direction to form the sliding region S in a wire area.

Meanwhile, although terms indicating directions such as up and down are used in this specification, these terms are only for convenience of explanation, and it is obvious to those skilled in the art of the present disclosure that they may vary depending on the location of a target object or the location of an observer.

The present disclosure has been described in detail. However, it should be understood that the detailed description and specific examples, while indicating preferred embodiments of the disclosure, are given by way of illustration only.

### [Explanation of signs]

1 electrode manufacturing system
10 electrode
10a electrode current collector
10b electrode active material
S sliding region
B coating boundary region
F transfer direction
100 drying device
110 first drying unit
120 second drying unit
130 boundary sensor
140 transfer unit
150 control unit

## Claims

1. A drying device (100), comprising:
a first drying unit (110) configured to dry an electrode active material (10b) located in a coating boundary region (B) including a boundary of a portion in which the electrode active material is (10b) coated and a portion in which the electrode active material (10b) is not coated on an electrode current collector (10a); and
a second drying unit (120) configured to dry the electrode active material (10b) coated on the electrode current collector (10a) as a whole,
wherein
the drying device (100) further comprises a boundary sensor (130) configured to sense the coating boundary region (B), and
the drying device (100) further comprises a control unit (150) configured to control movement of the first drying unit (110) to move above the coating boundary region (B) with reference to the sensing result of the boundary sensor (130), and
the second drying unit (120) is configured to dry an electrode active material (10b) located in a region other than the coating boundary region (B).

2. The drying device according to claim 1,
wherein the drying device (100) is configured such that drying by the first drying unit (110) is performed prior to drying by the second drying unit (120).

3. The drying device (100) according to claim 1,
wherein the first drying unit (110) is disposed upstream in a transfer direction (F) of the electrode current collector (10a), compared to the second drying unit (120).

4. The drying device (100) according to claim 1,
wherein the drying device (100) is configured to transfer the electrode current collector (10a) along a direction in which the boundary extends.

5. The drying device (100) according to claim 4 ,
wherein the first drying unit (110) and the second drying unit (120) are located to be spaced apart from each other along the direction in which the boundary extends.

6. The drying device (100) according to claim 1,
wherein the drying device (100) further comprises a transfer unit (140) configured to transfer the electrode current collector (10a) coated with the electrode active material (10b) in one direction.

7. The drying device (100) according to claim 1,
wherein the electrode current collector (10a) is a negative electrode current collector, and
wherein the electrode active material (10b) is a negative electrode active material.

8. The drying device (100) according to claim 1,
wherein at least one of the first drying unit (110) and the second drying unit (120) is a hot air blower for supplying air at a temperature higher than room temperature.

9. An electrode manufacturing system (1), comprising:
a coating device configured to coat an electrode active material on at least one surface of an electrode current collector; and
the drying device (100) according to any one of claims 1 to 8 configured to dry the electrode active material (10b) coated by the coating device.

10. The electrode manufacturing system according to claim 9, further comprising:
a rolling device configured to roll-press the dried electrode active material (10b).

11. A method for manufacturing an electrode using the drying device (100) according to any of claims 1 to 8, comprising:
(S1) preparing an electrode current collector (10a);
(S2) coating an electrode active material (10b) on at least a portion of the electrode current collector (10a);
(S3) drying an electrode active material (10b) located in a coating boundary region (B) including a boundary of a portion in which the electrode active material (10b) is coated and a portion in which the electrode active material (10b) is not coated on the electrode current collector (10a); and
(S4) drying the electrode active material (10b) coated on the electrode current collector (10a) as a whole.

## Patentansprüche

1. Trocknungsvorrichtung (100), umfassend:
eine erste Trocknungseinheit (110), die konfiguriert ist, um ein aktives Elektrodenmaterial (10b) zu trocknen, das sich in einem Beschichtungsgrenzbereich (B) befindet, der eine Grenze eines Abschnitts, in dem das aktive Elektrodenmaterial (10b) beschichtet ist, und eines Abschnitts, in dem das aktive Elektrodenmaterial (10b) nicht auf einen Elektrodenstromabnehmer (10a) beschichtet ist, beinhaltet; und
eine zweite Trocknungseinheit (120), die konfiguriert ist, um das aktive Elektrodenmaterial (10b) zu trocknen, das als Ganzes auf den Elektrodenstromabnehmer (10a) beschichtet ist,
wobei
die Trocknungsvorrichtung (100) ferner einen Grenzsensor (130) umfasst, der konfiguriert ist, um den Beschichtungsgrenzbereich (B) zu erfassen, und
die Trocknungsvorrichtung (100) ferner eine Steuereinheit (150) umfasst, die konfiguriert ist, um die Bewegung der ersten Trocknungseinheit (110) zu steuern, um sich in Bezug auf das Erfassungsergebnis des Grenzsensors (130) über den Beschichtungsgrenzbereich (B) zu bewegen, und
die zweite Trocknungseinheit (120) konfiguriert ist, um ein aktives Elektrodenmaterial (10b) zu trocknen, das sich in einem anderen Bereich als dem Beschichtungsgrenzbereich (B) befindet.

2. Trocknungsvorrichtung nach Anspruch 1,
bei der die Trocknungsvorrichtung (100) so konfiguriert ist, dass das Trocknen durch die erste Trocknungseinheit (110) vor dem Trocknen durch die zweite Trocknungseinheit (120) durchgeführt wird.

3. Trocknungsvorrichtung (100) nach Anspruch 1,
bei der die erste Trocknungseinheit (110) in einer Transferrichtung (F) des Elektrodenstromabnehmers (10a) im Vergleich zu der zweiten Trocknungseinheit (120) stromaufwärts angeordnet ist.

4. Trocknungsvorrichtung (100) nach Anspruch 1,
bei der die Trocknungsvorrichtung (100) konfiguriert ist, um den Elektrodenstromabnehmer (10a) entlang einer Richtung zu transferieren, in der sich die Grenze erstreckt.

5. Trocknungsvorrichtung (100) nach Anspruch 4,
bei der die erste Trocknungseinheit (110) und die zweite Trocknungseinheit (120) so angeordnet sind, dass sie entlang der Richtung, in der sich die Grenze erstreckt, voneinander beabstandet sind.

6. Trocknungsvorrichtung (100) nach Anspruch 1,
bei der die Trocknungsvorrichtung (100) ferner eine Transfereinheit (140) umfasst, die konfiguriert ist, um den Elektrodenstromabnehmer (10a), der mit dem aktiven Elektrodenmaterial (10b) beschichtet ist, in eine Richtung zu transferieren.

7. Trocknungsvorrichtung (100) nach Anspruch 1,
bei der der Elektrodenstromabnehmer (10a) ein negativer Elektrodenstromabnehmer ist, und
bei der das aktive Elektrodenmaterial (10b) ein negatives aktives Elektrodenmaterial ist.

8. Trocknungsvorrichtung (100) nach Anspruch 1,
bei der die erste Trocknungseinheit (110) und/oder die zweite Trocknungseinheit (120) ein Heißluftgebläse zum Zuführen von Luft mit einer Temperatur höher als Raumtemperatur ist.

9. Elektrodenherstellungssystem (1), umfassend:
eine Beschichtungsvorrichtung, die konfiguriert ist, um ein aktives Elektrodenmaterial auf mindestens eine Oberfläche eines Elektrodenstromabnehmers zu beschichten; und
die Trocknungsvorrichtung (100) nach einem der Ansprüche 1 bis 8, die konfiguriert ist, um das aktive Elektrodenmaterial (10b) zu trocknen, das durch die Beschichtungsvorrichtung beschichtet ist.

10. Elektrodenherstellungssystem nach Anspruch 9, ferner umfassend:
eine Walzvorrichtung, die konfiguriert ist, um das getrocknete aktive Elektrodenmaterial (10b) durch Walzen zu pressen.

11. Verfahren zum Herstellen einer Elektrode unter Verwendung der Trocknungsvorrichtung (100) nach einem der Ansprüche 1 bis 8, umfassend:
(S1) Vorbereiten eines Elektrodenstromabnehmers (10a);
(S2) Beschichten eines aktiven Elektrodenmaterials (10b) auf mindestens einen Abschnitt des Elektrodenstromabnehmers (10a);
(S3) Trocknen eines aktiven Elektrodenmaterials (10b), das sich in einem Beschichtungsgrenzbereich (B) befindet, der eine Grenze eines Abschnitts, in dem das aktive Elektrodenmaterial (10b) beschichtet ist, und eines Abschnitts, in dem das aktive Elektrodenmaterial (10b) nicht auf den Elektrodenstromabnehmer (10a) beschichtet ist, beinhaltet; und
(S4) Trocknen des aktiven Elektrodenmaterials (10b), das als Ganzes auf den Elektrodenstromabnehmer (10a) beschichtet ist.

## Revendications

1. Dispositif de séchage (100), comprenant :
une première unité de séchage (110) configurée pour sécher une matière active d'électrode (10b) située dans une zone limite de revêtement (B) comprenant une limite d'une partie dans laquelle la matière active d'électrode (10b) est revêtue, et une partie dans laquelle la matière active d'électrode (10b) n'est pas revêtue sur un collecteur de courant d'électrode (10a) ; et
une deuxième unité de séchage (120) configurée pour sécher la matière active d'électrode (10b) revêtue sur le collecteur de courant d'électrode (10a) dans son ensemble,
le dispositif de séchage (100) comprenant en outre un détecteur de limite (130) configuré pour détecter la zone limite de revêtement (B), et
le dispositif de séchage (100) comprenant en outre un module de commande (150) configuré pour commander le déplacement de la première unité de séchage (110) afin qu'elle se déplace au-dessus de la zone limite de revêtement (B) en fonction du résultat de la détection par le détecteur de limite (130), et
la deuxième unité de séchage (120) étant configurée pour sécher la matière active d'électrode (10b) dans une zone autre que la zone limite de revêtement (B).

2. Dispositif de séchage selon la revendication 1,
le dispositif de séchage (100) étant configuré de façon que le séchage par la première unité de séchage (110) soit effectué préalablement au séchage par la deuxième unité de séchage (120).

3. Dispositif de séchage (100) selon la revendication 1,
la première unité de séchage (110) étant disposé en amont dans une direction de transfert (F) du collecteur de courant d'électrode (10a) relativement à la deuxième unité de séchage (120).

4. Dispositif de séchage (100) selon la revendication 1,
le dispositif de séchage (100) étant configuré pour transférer le collecteur de courant d'électrode (10a) dans une direction dans laquelle la limite s'étend.

5. Dispositif de séchage (100) selon la revendication 4,
la première unité de séchage (110) et la deuxième unité de séchage (120) étant positionnées de façon à être espacées l'une de l'autre dans la direction dans laquelle la limite s'étend.

6. Dispositif de séchage (100) selon la revendication 1,
le dispositif de séchage (100) comprenant en outre un dispositif de transfert (140) configuré pour transférer le collecteur de courant d'électrode (10a) enduit de la matière active d'électrode (10b) dans une direction.

7. Dispositif de séchage (100) selon la revendication 1,
le collecteur de courant d'électrode (10a) étant un collecteur de courant d'électrode négative, et
la matière active d'électrode (10b) étant une matière active d'électrode négative.

8. Dispositif de séchage (100) selon la revendication 1,
au moins une de la première unité de séchage (110) et de la deuxième unité de séchage (120) étant une soufflante d'air chaud refoulant de l'air à une température supérieure à celle de l'air ambiant.

9. Système de fabrication d'électrode (1) comprenant :
un dispositif de revêtement configuré pour enduire une matière active d'électrode sur au moins une surface d'un collecteur de courant d'électrode ; et
le dispositif de séchage (100) selon une quelconque des revendications 1 à 8 configuré pour sécher la matière active d'électrode (1 Ob) enduite par le dispositif de revêtement.

10. Système de fabrication d'électrode selon la revendication 9, comprenant en outre :
un dispositif de laminage configuré pour presser au rouleau la matière active d'électrode (10b) séchée.

11. Procédé de fabrication d'une électrode utilisant le dispositif de séchage (100) selon une quelconque des revendications 1 à 8, comprenant :
(S1) la préparation d'un collecteur de courant d'électrode (10a) ;
(S2) l'enrobage d'une matière active d'électrode (10b) sur au moins une partie du collecteur de courant d'électrode (10a) ;
(S3) le séchage d'une matière active d'électrode (10b) située dans une zone limite de revêtement (B) comprenant une limite d'une partie dans laquelle la matière active d'électrode (10b) est revêtue et une partie dans laquelle la matière active d'électrode (10b) n'est pas revêtue sur le collecteur de courant d'électrode (10a) ; et
(S4) le séchage de la matière active d'électrode (10b) enrobée sur l'intégralité du collecteur de courant d'électrode (10a)
